# EUROPEAN PATENT APPLICATION

(11) **EP 0 678 695 A2**
(43) Date of publication of application: **25.10.1995**
(21) Application number: 95200552.8
(22) Date of filing: 07.03.1995
(51) Int. Cl.: F16L 13/14, F28F 9/04

(54) **Brazeless end connector for pipes for fluid and a heat exchanger which uses this connector**

(30) Priority: 20.04.1994 IT MI940766
(71) Applicant: GIANNONI S.r.l., I-20079 Castiraga Vidardo (Lodi) (IT)
(72) Inventor: Giannoni, Rocco, I-20079 Sant'Angelo Lodigiano, Lodi (IT); Quaini, Carlo, I-20079 Sant'Angelo Lodigiano, Lodi (IT)
(74) Representative: Falcetti, Carlo

(57) **Abstract**

A brazeless end connector for pipes for fluid (15, 26, 45, 39) made from malleable material, such as copper or stainless steel, including a pipe end (14, 25, 40) cold-worked to form a first cylindrical coupling surface for coupling with a corresponding second surface of an element (16, 28) to be coupled, a resilient ring (23, 32) interposed between the surfaces to ensure that the coupling is fluid-tight and means (33, 27, 43, 48, 20) for preventing the element to be coupled from slipping axially out of the first cylindrical coupling surface.

## Description

The present invention relates to a brazeless end connector for pipes for fluids, particularly copper pipes, which can be used to advantage although not exclusively in heat exchangers.

It is known that liquid-liquid or liquid-gas heat exchangers are generally made from materials with a high thermal conductivity and, at the same time, very good resistance to corrosion.

The material most commonly used is copper or, in specific applications, stainless steel, in the form of circular or oval section tubes.

Such equipment needs end connectors for connecting them to an hydraulic circuit of the system, such connectors generally being threaded.

Hydraulic connectors are also known which are constituted by short, relatively flexible, corrugated tubes for coupling hydraulic systems and apparatus such as water heaters and the like, these also having end couplings.

Normally both of the above types of coupling are formed, for economic reasons, from materials, such as brass, which are inexpensive, and are made by shell moulding or mechanical working, such as turning, from starting materials in the form of hollow bars and the like.

In the case of shell moulding, mechanical finishing by turning is, however, usually also necessary.

The cost of these couplings is thus relatively high.

The connection of these couplings to heat exchangers or to flexible connectors is then achieved by brazing with the addition of a suitable alloy, such as a silver or copper alloy, which adds further costs and not inconsiderable problems.

Indeed the brazing is carried out in a high-temperature oven, at a temperature of the order of 800/900°C, in a controlled atmosphere.

At this temperature the zinc in the material (brass) tends to evaporate and thus pollutes the atmosphere in the oven, upsetting the brazing parameters and reducing the operational life of the oven.

In addition to this, there is a frequent need for expensive cleaning operations to remove the deposits formed by the zinc in the brazing chamber, with consequent loss of productivity.

One solution to this problem would be to use copper couplings, but these are very expensive and are not in any case entirely satisfactory from a mechanical point of view, even if work-hardened during the formation of the threaded attachments.

To avoid these limitations, the subject of the present invention is a brazeless end connector which uses the malleability of the material constituting the heat exchange pipe or the hydraulic coupling to form brazeless ends with screw or fast-on coupling attachment in which fluid-tight sealing is ensured by a resilient ring and the mechanical coupling of the element to be connected to the pipe is ensured by the plastic deformation of the end of the pipe.

In a further aspect of the present invention, the need for an intermediate coupling element is completely eliminated as a fast-on coupling end connector is formed integrally in the end of the pipe by cold working, without the need for any turning.

This results in an end connector which eliminates the problems mentioned above, is of derisory cost and is particularly practical and convenient to use in water heating and distribution systems in which the pressures do not exceed 10 atmospheres and the temperatures of the fluid do not exceed 100-120°C.

The invention may also be applied particularly to heat exchangers for domestic boilers, radiators and the like which can be made cheaply and are functional and easy to install and maintain and, in addition to this, are constituted by a basic unit which can be manufactured on a large scale and which may be easily adapted to various requirements of use.

The characteristics and advantages of the invention will become clearer from the description which follows and from the appended drawings, in which:
Figure 1 is a partially-sectioned elevation of a portion of a heat exchanger known in the art;
Figure 2 is a partially-sectioned side view of a flexible hydraulic connector known in the art;
Figure 3 is a partially-sectioned exploded view of a first embodiment of an end connector of the present invention;
Figure 4 is a sectional view of the end connector of Figure 3 as assembled;
Figure 5 is a partially-sectioned, exploded view of a second embodiment of an end connector according to the present invention;
Figure 6 is a side view of the assembled end connector of Figure 5;
Figure 7 is an elevational view of a resilient clamping ring for the end connector of Figures 5 and 6;
Figure 8 is a section of a connector pipe with ends formed in accordance with the present invention;
Figure 9 is a partially-sectioned side view of a portion of a heat exchanger provided with a third embodiment of an end connector of the present invention.

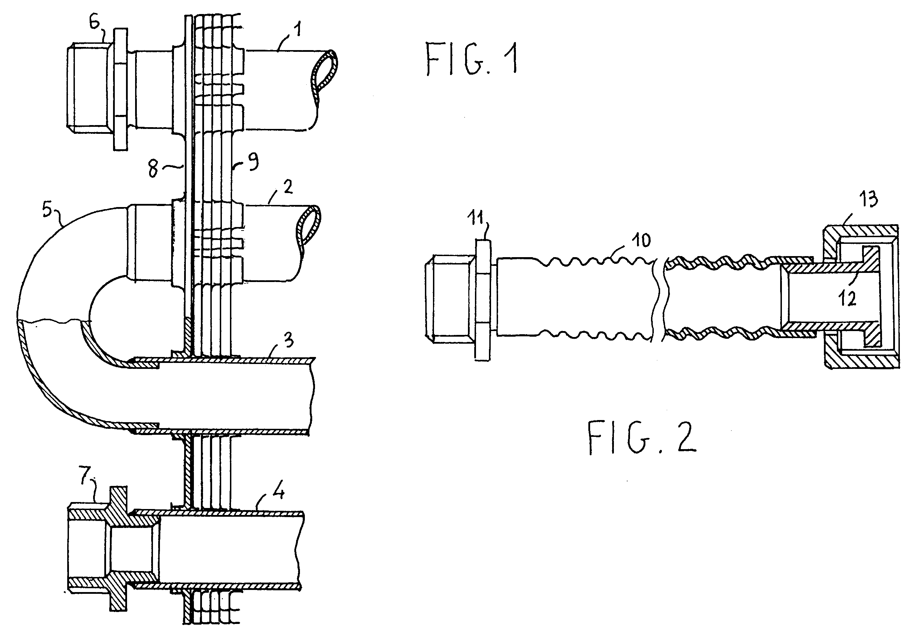

With reference to Figure 1, a gas/liquid heat exchanger of known type is formed from a plurality of straight pipes 1, 2, 3, 4 connected in series by a plurality of tubular elbows (only one of which, 5, is shown) to form a serpentine duct with two threaded unions 6, 7 for connection in an hydraulic circuit.

The pipes 1, 2, 3, 4 are arranged parallel to each other and supported by a pair of head plates only one of which, 8, is shown, having apertures in which the pipes 1, 2, 3, 4 are inserted perpendicularly thereto to form a rigid framework.

In general, a plurality of radiant fins is also provided in the form of thin apertured plates 9 located parallel to and between the head plates 8 with raised portions formed by bending serving as spacers.

The pipes 1, 2, 3, 4, elbows such as 5, head plates such as 8 and radiant fins 9, are of copper (very occasionally of stainless steel) and are brazed together in an oven at a high temperature of the order of 800-900°C in a controlled atmosphere to prevent oxidation of the copper.

The unions 6, 7, made by turning from hexagonal bars in order to form a clamping nut, external threading and a brazing sleeve, are fixed in the same brazing operation.

Even though the material of the unions (brass) is cheaper than copper, the necessary mechanical workings make these components relatively expensive.

Moreover during the brazing process, the brass releases Zinc which changes the atmosphere in the oven to an uncontrollable extent and changes the characteristics, and is detrimental to, the quality of the brazing.

There is also a tendency for deposits and encrustations to form in the brazing chamber which necessitate frequent cleaning operations and consequently reduce the productivity of the plants.

These same problems occur in the production of flexible connector tubes of the type illustrated in Figure 2, in which a piece of corrugated tube 10 (generally of copper but occasionally of soft brass) is terminated with a union 11 added to one of its ends by brazing, with a smooth coupling sleeve 12 (also added by brazing) at the other end with the addition of a movable nut 13 as a threaded clamping ring.

Again in this case, the union 11, the sleeve 12 and the nut 13 which are of brass, are relatively expensive and detrimentally affect the necessary brazing operations.

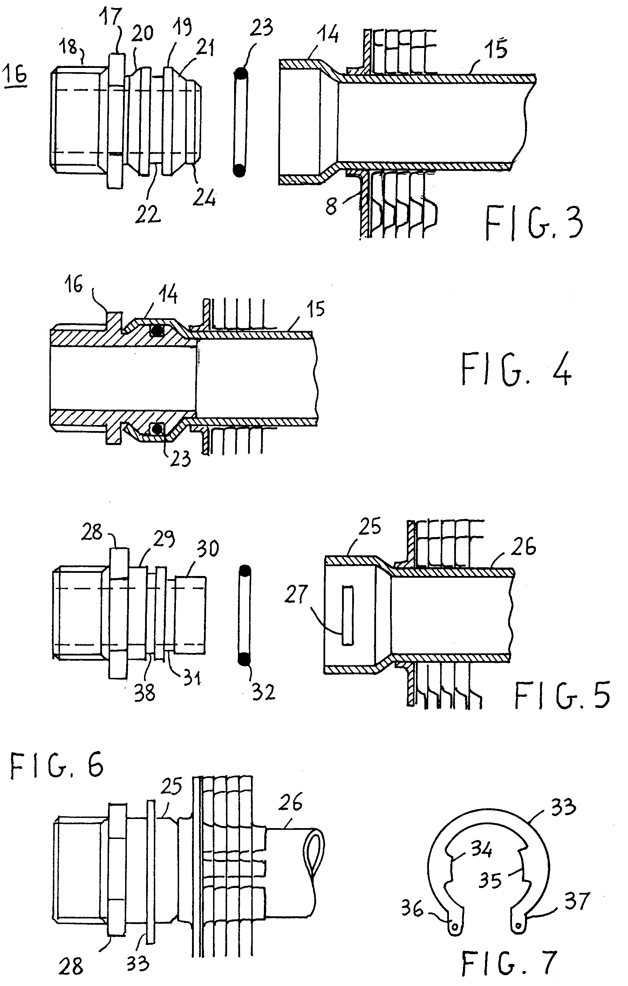

Figure 3 is an exploded view of a first embodiment of a brazeless end connector which, in accordance with the present invention, eliminates the problems connected with the diffusion of zinc during brazing operations.

In Figure 3, the end 14 of a heat exchange pipe 15, which is of copper but could on occasion be of stainless steel, is shaped by cold deformation (coining or rolling) to form a cup with a cylindrical inner surface calibrated to be of greater diameter than the pipe 15.

The operation may be carried out either before or after the brazing of the heat exchanger but preferably after the brazing so as to harden the copper locally and improve its mechanical properties.

The end connector thus formed is intended for coupling with a brass union 16 provided with a clamping nut 17, threading 18 and a sleeve with an outer cylindrical surface 19 flanked by two conic frusta 20, 21.

The outer cylindrical surface 19 has an annular groove 22 of square or semicircular section for housing a resilient ring (of rubber or other elastomeric material) or an O-ring 23.

Preferably, but not necessarily, the sleeve extends into a cylindrical head 24 having a diameter equal to the internal diameter of the pipe 15 while the diameter of the cylindrical surface 19 is equal to the inner diameter of the cup 14.

The union 16 is fitted into the cup 14 as illustrated in Figure 4 and the lip of the cup 14 is upset (or folded by cold deformation) onto the frustoconical surface 20 of the union.

With this operation, the union 16 is anchored firmly to the end of the heat exchange pipe 15 and the fluid sealing of the coupling is ensured by the resilient ring 23 housed in the groove 22 and imprisoned there by the cup 14.

Thus a brazeless end connector is formed which is functionally equivalent to that of Figure 1.

It should be noted that the penetration of the cylindrical head 24 into the pipe 15, in a zone in which this is stiffened by the plate 8, ensures that the end connector is particularly strong and rigid.

Clearly if the pipe 15 were a portion of flexible connector it would be possible to form an end union or even a sleeve with a nut 13 functionally similar to those shown in Figure 2 in the same manner without brazing.

All the problems connected with the diffusion of the zinc in the brazing process are eliminated.

In particular, in the formation of a connector equivalent to that of Figure 2, brazing is entirely avoided with considerable savings in cost in the production process.

Figure 5 is an exploded view of a second embodiment of a brazeless end connector which has the further advantage of avoiding the application of twisting moments to the pipe 15 and of allowing the clamping nut of the union to take up any angular position so as to make the installation easier and safer, particularly in spaces with reduced access.

In Figure 5, the cup 25 formed at the end of the heat exchange pipe 26 is provided with two slots 27 on radially opposite sides with respect to the axis of the duct, these being made by blanking in the same cold forming operation or being made subsequently according to the specific requirements of the purchaser.

This operation may even be delegated to the purchaser.

In this case the union 28 is of the fast-on coupling type and has a first cylindrical surface 29 of a diameter equal to the inner diameter of the cup 25 and a second cylindrical surface 30 of a diameter equal to the inner diameter of the pipe 26.

A first annular groove 31 for housing a resilient ring (O-ring) 32 is formed between the first and second cylindrical surfaces and a second annular groove 38 of square section is formed in the first cylindrical surface to house the teeth of a ring or, rather, a fork clamp.

When the union 28 is fitted into the cup 25, the O-ring 32 housed in the groove 31 is pressed against the inner wall of the cup and ensures that the coupling is fluid-tight.

The union is prevented from coming loose from the cup by a resilient ring 33, of known type, such as a Seeger ring shown in Figure 7.

The open ring 33 has two internal, opposing, retaining teeth 34, 35 which pass through the slots 27 and are inserted in the annular groove 38 in the union.

This insertion is facilitated by two arms 36, 37 of the ring each having an aperture for engagement by an expansion tool.

The assembled end connector is shown in Figure 6 and clearly the union 28 can be rotated about its axis and may be removed simply by opening the ring 33 and removing it from its seat.

This same structure may be used to fix a union releasably to the end of a flexible connector tube such as that illustrated in Figure 2, as well as in heat exchangers.

In the embodiments described, the hydraulic joint for coupling the heat exchanger or the connector to a hydraulic system includes a union formed by turning which is connected by a screw coupling to a corresponding end connector of the hydraulic circuit.

However, if this is made of copper or other material workable by plastic deformation, it is possible to form a fluid-tight joint or coupling by forming the end of the hydraulic circuit in such a manner that this couples directly with the cup formed at the end of the apparatus (exchanger) pipe or flexible connector tube.

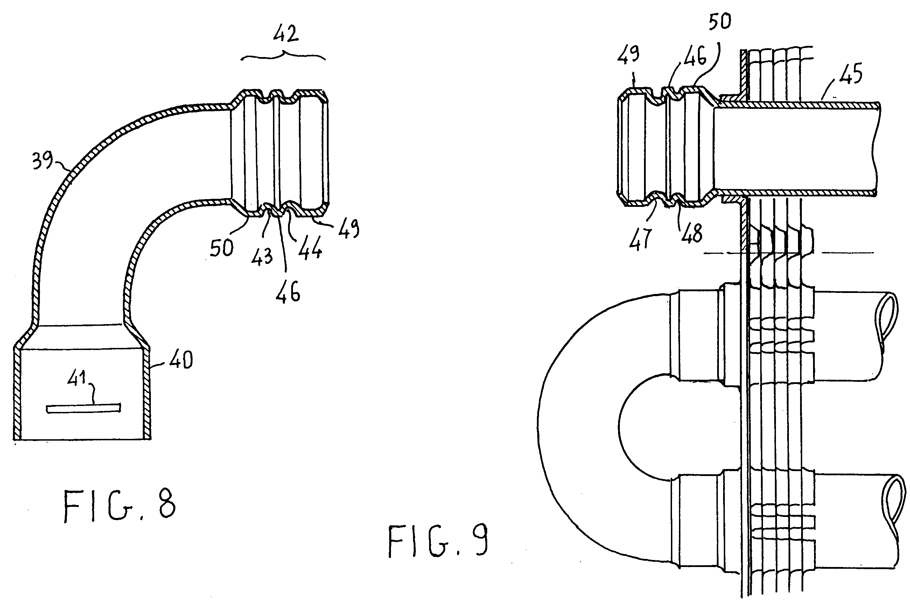

Figure 8 shows, purely by way of example and in section, a copper connector elbow 39, one end of which is formed as a cup 40 and has a coupling slot 41 for a clamping ring of an end connector spigot inserted in the cup 40.

The other end of the elbow 39 is shaped by plastic deformation to form a spigot or sleeve coupling 42 having an outer cylindrical surface of a diameter equal to the inner diameter of a cup with which the coupling is provided.

Two annular grooves 43, 44 are formed in the surface of the sleeve 42 for housing respectively an 0-ring and the teeth of a fork clamp for preventing the removal of the spigot.

These annular grooves divide the outer cylindrical surface into three cylindrical sections 46, 49, 50. These cylindrical surfaces ensure the rigidity of the coupling by avoiding dangerous misalignments.

Clearly the same type of end connector may be provided on hydraulic apparatus.

For example Figure 9 shows part of a heat exchanger in which the end 46 of the hydraulic pipe 45 is cold deformed to form a connector spigot having a first groove 47 and a second groove 48 for housing an 0-ring and anti-release clamping means respectively.

Again in this case, the end connector does not require the brazing of brass unions for its formation.

The absence of zinc in the atmosphere of the oven in which the heat exchanger is brazed also allows hydrogen and nitrogen to be used in controlled quantities to achieve superficial chemical attack which, as well as preventing oxidation, roughens the surfaces of the fins to a controlled extent, this facilitating the subsequent painting for which cleanliness of the surfaces, absence of oxides and a certain roughness are essential for perfect adhesion of the paint to the substrate.

In the description above, reference is made to a liquid/gas heat exchanger and to a flexible connector tube.

It is however clear that the present invention can also be used to advantage in other types of apparatus, such as, for example, liquid/liquid heat exchangers and in the formation of hydraulic systems with tubes of malleable metal such as copper and stainless steel.

It should also be noted that the coining, upsetting and rolling operations by which the end connectors are formed may be carried out with relatively simple apparatus which does not have much bulk or weight and is relatively inexpensive and can also be used at the place in which the hydraulic system and equipment are to be installed instead of the bulky thread-forming apparatus, whether this is manual or automatic, used for the preparation of the end connectors for pipes, generally of iron, which are subject to rapid oxidation and deterioration.

## Claims

1. A brazeless end connector for a pipe for fluids (15, 26, 45, 39), characterised in that it comprises a cold-deformable, tubular metal element integral with the pipe and having, an end (14, 25, 40) cold-worked to form a first cylindrical surface having a diameter greater than that of the tubular element (15, 26, 45, 39) for coupling with a corresponding second surface of an element (16, 28) to be coupled,
a resilient ring (O-ring) (23, 32) interposed between the surfaces to ensure the fluid-tightness of the coupling, and means in the said end (33, 27, 43, 48, 20) for preventing the element (16, 28) to be coupled from slipping axially out of the said cylindrical surface.

2. A pipe end connector as in Claim 1, in which the tubular metal element is of copper, stainless steel or aluminium.

3. A pipe end connector as in Claims 1 or 2, in which the first cylindrical surface is an internal surface and the element (16) to be coupled comprises a metal insert having the second coupling surface (19) for coupling with the first cylindrical surface, an annular groove (22) in the second cylindrical surface housing the resilient ring and in which the means for preventing the axial removal of the element (16) to be coupled consists of a lip of the said end (14) upset on to a corresponding third surface (20) of the insert adjacent the second surface (19) and recessed therein.

4. An end connector as in Claims 1 or 2, in which the first cylindrical surface is an internal surface and the element to be coupled comprises a metal insert having the second cylindrical surface, a first annular groove (31) in the second surface housing the resilient member (32), a second annular groove (38) in the second surface for housing the teeth of a forked locking member (33), and the means for preventing the axial removal of the element to be coupled comprise a pair of slots (27) formed in the said end by punching in radially opposite positions relative to the axis of the first surface for housing the teeth of the locking member (37).

5. An end connector as in Claims 1 or 2, in which the first cylindrical surface (49, 26) is an external surface and comprises a first annular groove (47) for housing a resilient ring (O-RING) formed by cold working of the tubular element and the means for preventing the axial removal of the element to be coupled comprise a second annular groove (48) for housing the teeth of a forked locking member (33), the second groove being formed by cold working of the tubular element.

6. A heat exchanger constituted by a cold-workable metal pipe (1, 2, 32) housed in a stiffening frame (87) and fixed thereto by brazing, characterised in that the pipe has end connectors as claimed above for its connection to a hydraulic circuit.

7. A heat exchanger as in Claim 6, including a plurality of fins (9), radiant, and otherwise, brazed to the pipe.

8. A heat exchanger as in Claims 6 and 7, in which the end connectors are roughened as a result of the cold working carried out after the brazing operation.
